# EUROPEAN PATENT APPLICATION

(11) **EP 3 326 912 A1**
(43) Date of publication of application: **30.05.2018**
(21) Application number: 16200519.3
(22) Date of filing: 24.11.2016
(51) Int. Cl.: B64C 39/02, B64C 25/52, B64C 27/08

(54) **UNMANNED AERIAL VEHICLE LANDING SYSTEM**

(71) Applicant: DroneGrid BVBA, 1950 Kraainem (BE)
(72) Inventor: van der Vaeren, Stanislas, B-3220 Holsbeek (BE); Bossens, Maxime, B-3210 Linden (BE)
(74) Representative: Pappaert, Kris

(57) **Abstract**

The present invention generally provides an unmanned aerial vehicle (UAV) and a system comprising the unmanned aerial vehicle and a docking station. The UAV comprises (A) a main body (110) having a central axis; (B) a frame coupled to the main body (110) comprising a plurality of flight arms (120), each flight arm (120) extending laterally outward from the main body (110) and comprising at least one rotor (125) configured for providing flight; and (C) at least three or at least four landing units (150) optionally equally spread out about the central axis of the main body (110), each landing unit comprising (C.i) a support member (160) having at least a first means of attachment for attaching the landing unit (150) to the frame or the main body (110); and (C.ii) a skid (170) attached to the support member (160) and disposed at an angle of incline of at least 20° to at most 70° to the central axis, preferably at least 30° to at most 60°. The plurality of landing units is adapted to allow the UAV to land and rest in a stable position within the docking station as a surface.

## Description

### FIELD OF THE INVENTION

The present invention relates to the field of unmanned aerial vehicles and the use thereof. It also relates to a system for unmanned aerial vehicles and a use thereof. It also relates to a method for landing unmanned aerial vehicles on said system.

### BACKGROUND OF THE INVENTION

Modern unmanned aerial vehicles (UAV) provide an efficient alternative in many applications. They provide improved economical approach for performing measurements or capturing of data when compared to manned aircrafts or satellites. For example, an UAV equipped with a camera or a scanner can quickly and accurately capture images or videos for construction, farming, real estate, search and rescue, and surveillance purposes. Other industries, such as those that require manual efforts, e.g. delivery, repairs, sample collecting, and so on, can also benefit from using UAVs and various adaptations thereof.

Despite the advances of remote technology, however, there is more often than not a need for an operator to control the flight and operations of the UAV. This becomes increasingly problematic when the UAV is deployed over harsh terrain (e.g., mountains) or over large areas of land. In such cases, an operator will have difficulty finding and following the UAV from a distance. Although modern UAVs may even provide an operator real-time video captured from the UAV during the remote control, the UAV operator will still need to stay within a suitable range, thus requiring the operator to regularly stop the UAV and reposition himself.

In a remote control scenario, however, additional problems arise with conventional UAVs. These problems may include expected scenarios, such as a drained battery, but also unforeseen weather conditions (e.g. strong wind, rain) or malfunctions will require a conventional UAV to land in remote areas. The remote landing process for an UAV operator is difficult, and even with adequate training there is still a fairly high risk of damaging or destroying the UAV. Moreover, a damaged UAV can result in considerable expense and will often severely delay a project.

In many cases, a regular repetition of the UAV's operations is necessary. For example, an operation may require a UAV to capture photos or collect samples every hour, or every day at a certain timeframe. Not only are these repetitive tasks strenuous and boring for the UAV operator, if for some reason the operator is unable to reach the area at a specific timing, the entire operation may be lost. Combined with the problems already described for remote control scenario, many industries are hesitant to employ UAV systems.

Several methods or systems are known to minimize or compensate for landing errors. However, these are often quite costly, still prone to errors, approximate, slow, and/or valid for only specific scenarios. Hence, it is an aim of the invention to overcome the problems of the art. In particular, there is a need for an improved UAV, an UAV system and/or methods that can handle repeatedly performing UAV's operations without the aforementioned drawbacks.

### SUMMARY OF THE INVENTION

In a first aspect, the present invention relates to an unmanned aerial vehicle (100) comprising:
(A) a main body (110) having a central axis;
(B) a frame coupled to the main body (110) comprising a plurality of flight arms (120), each flight arm (120) extending laterally outward from the main body (110) and comprising at least one rotor (125) configured for providing flight; and
(C) at least three or at least four landing units (150), preferably equally spread out about the central axis of the main body (110), each landing unit comprising
   (C.i) a support member (160) having at least a first means of attachment for attaching the landing unit (150) to the frame or the main body (110); and
   (C.ii) a skid (170) attached to the support member (160) and disposed at an angle of incline of at least 20° to at most 70° to the central axis, preferably at least 30° to at most 60°.

More particularly, the unmanned aerial vehicle (100) as disclosed herein provides that the skid (170) of each landing unit (150) does not extend underneath the main body (110). More particularly, the unmanned aerial vehicle (100) as disclosed herein provides that the skid (170) of each landing unit (170) is at least partially curved, preferably towards one or both of the ends of said skid (170).

More particularly, the unmanned aerial vehicle (100) as disclosed herein provides that at least one landing unit (150) comprises a conducting element connected to the main body (110) and adapted for charging the main body (110) through said conducting element.

More particularly, the unmanned aerial vehicle (100) as disclosed herein provides that a landing unit (150) is coupled to a flight arm (120) and disposed axially distant from the at least one rotor (125).

More particularly, the unmanned aerial vehicle (100) as disclosed herein provides that the skid (170) of the landing unit (150) coupled to a flight arm (120) extends laterally outward beyond the at least one rotor (125) attached to said flight arm (120).

More particularly, the unmanned aerial vehicle (100) as disclosed herein provides that a landing unit (150) is coupled to a docking arm (130) extending laterally outward from the main body (110).

More particularly, the unmanned aerial vehicle (100) as disclosed herein provides that the length of the skids (170) and the length of the flight (120) and/or docking arms (130) have a ratio of at most 1:1 to at least 1:5.

In a further aspect, the present invention provides in a system (300), comprising:
- an unmanned aerial vehicle (100) as described herein; and
- a docking station (200) adapted for landing of the unmanned aerial vehicle (100) and comprising a conically-shaped housing (210) having a curvature corresponding to the angle of incline of the skids (170).

More particularly, the system (300) as disclosed herein provides that the system (300) further comprises a charging unit configured to charge the unmanned aerial vehicle (100).

More particularly, the system (300) as disclosed herein provides that the charging unit is connected to charging elements (320) disposed upon and spread out over at least a part of the surface of the housing (210).

More particularly, the system (300) as disclosed herein further comprises a guiding unit configured to guide the unmanned aerial vehicle (100) during landing into the docking station (200).

More particularly, the system (300) as disclosed herein further comprises a heating unit configured to heat the docking station (200).

More particularly, the system (300) as disclosed herein further comprises a cover (280) disposed above the docking station (200) and configured to open and close before and/or after lift-off and landing of the unmanned aerial vehicle (100).

More particularly, the system (300) as disclosed herein further comprises two or more docking stations.

### BRIEF DESCRIPTION OF THE DRAWINGS

**FIG. 1** represents an illustration of an unmanned aerial vehicle according to a particular embodiment of the present invention.

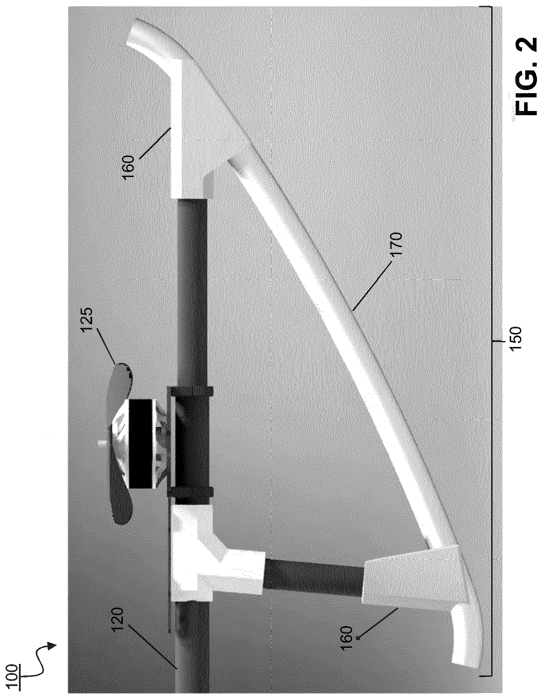

**FIG. 2** represents an illustration of a landing unit of an unmanned aerial vehicle according to a particular embodiment of the present invention.
**FIG. 3** represents an illustration of a docking station according to a particular embodiment of the present invention, in a closed configuration (**FIG. 3A**) and an open configuration (**FIG. 3B**).
**FIG. 4** represents an illustration of a docking station according to a particular embodiment of the present invention. **FIG. 4A** and **FIG. 4B** depicts a top view and side view, respectively, of a docking station according to a particular embodiment of the present invention, showing a planar or sheet-like charging unit. **FIG. 4C** depicts a detail of a docking station, showing a charging unit made up of a plurality of wires.

### DETAILED DESCRIPTION OF THE INVENTION

Before the present invention and different embodiments thereof are described, it is to be understood that this invention is not limited to the particular devices, systems and methods or combinations described, since such devices, systems and methods and combinations may, of course, vary. It is also to be understood that the terminology used herein is not intended to be limiting, since the scope of the present invention will be limited only by the appended claims.

As used herein, the singular forms "a", "an", and "the" include both singular and plural referents unless the context clearly dictates otherwise.

The terms "comprising", "comprises" and "comprised of" as used herein are synonymous with "including", "includes" or "containing", "contains", and are inclusive or open-ended and do not exclude additional, non-recited members, elements or method steps. It will be appreciated that the terms "comprising", "comprises" and "comprised of" as used herein comprise the terms "consisting of", "consists" and "consists of".

The recitation of numerical ranges by endpoints includes all numbers and fractions subsumed within the respective ranges, as well as the recited endpoints.

Whereas the terms "one or more" or "at least one", such as one or more or at least one member(s) of a group of members, is clear per se, by means of further exemplification, the term encompasses inter alia a reference to any one of said members, or to any two or more of said members, such as, e.g., any ≥3, ≥4, ≥5, ≥6 or ≥7 etc. of said members, and up to all said members.

All references cited in the present specification are hereby incorporated by reference in their entirety. In particular, the teachings of all references herein specifically referred to are incorporated by reference.

Unless otherwise defined, all terms used in disclosing the invention, including technical and scientific terms, have the meaning as commonly understood by one of ordinary skill in the art to which this invention belongs. By means of further guidance, term definitions are included to better appreciate the teaching of the present invention.

The term "perpendicular" as used herein can include a certain degree of deviation from an exact perpendicular orientation. In particular, a first plane or object is considered perpendicular as to be positioned relative to a second plane or object when the angle between the planes defined by these objects is between 85 ° and 95 °, preferably between 87 ° and 92 °, more preferably between 88 ° and 91 °, and most preferably 90 °.

The term "parallel" as used herein can include a certain degree of deviation from an exact parallel orientation. In particular, a first plane or object is considered perpendicular as to be positioned relative to a second plane or object when the angle between the planes defined by these objects is between 0 ° and 5 °, preferably between 0° and 2 ° , more preferably between 0 ° and 1 °, and most preferably 0 °.

In the following passages, different aspects of the invention are defined in more detail. Each aspect so defined may be combined with any other aspect or aspects unless clearly indicated to the contrary. In particular, any feature indicated as being preferred or advantageous may be combined with any other feature or features indicated as being preferred or advantageous.

Reference throughout this specification to "one embodiment" or "an embodiment" means that a particular feature, structure or characteristic described in connection with the embodiment is included in at least one embodiment of the present invention. Thus, appearances of the phrases "in one embodiment" or "in an embodiment" in various places throughout this specification are not necessarily all referring to the same embodiment, but may. Furthermore, the particular features, structures or characteristics may be combined in any suitable manner, as would be apparent to a person skilled in the art from this disclosure, in one or more embodiments. Furthermore, while some embodiments described herein include some but not other features included in other embodiments, combinations of features of different embodiments are meant to be within the scope of the invention, and form different embodiments, as would be understood by those in the art. For example, in the appended claims, any of the claimed embodiments can be used in any combination.

In the present description of the invention, reference is made to the accompanying drawings that form a part hereof, and in which are shown by way of illustration only of specific embodiments in which the invention may be practiced. Parenthesized and/or emboldened reference numerals affixed to respective elements merely exemplify the elements by way of example, with which it is not intended to limit the respective elements.

It is to be understood that other embodiments may be utilised and structural or logical changes may be made without departing from the scope of the present invention. The following detailed description, therefore, is not to be taken in a limiting sense, and the scope of the present invention is defined by the appended claims.

The present invention generally provides an unmanned aerial vehicle (UAV) and a system comprising the unmanned aerial vehicle and a docking station. A major advantage of the present invention is an improved landing of the UAV both on a flat surface as in the docking station. For instance, the UAV and the system of the present invention reduce the risk of damaging or destroying the UAV, particularly when landing in harsh terrain. In other words, the present invention allows a safe and, preferably, automated landing both on a flat surface or on harsh terrains. The UAV operations can thus be performed quickly, accurately and can be obtained at a reasonable cost. Further, the docking station as part of the system of the present invention is light, quick and easy to install, and compatible with a variety of terrains, but can also be installed on otherwise inaccessible surfaces, such as a post (e.g. lamps, grids,) a roof (e.g. house, car), or even cliffs. Landing on the docking station results in a considerably improved and safe landing, especially for automated landings. Since the docking station can be installed on any surface, the automated landings are improved regardless of the surface conditions in a particular area.

Additionally, the invention enables a more efficient UAV work flow, thereby optimising its operation speed. Advantageously, the invention also reduces the amount of labour required of an UAV operator, thus improving the user friendliness particularly for inexperienced operators. Further the invention provides a better integration with present systems and external modules through the docking station.

An aspect of the invention provides an unmanned aerial vehicle comprising: (A) a main body having a central axis; (B) a frame coupled to the main body comprising a plurality of flight arms, each flight arm extending laterally outward from the main body and comprising at least one rotor configured for providing flight; and (C) at least three landing units, optionally equally spread out about the central axis of the main body, each landing unit comprising (C.i) a support member having at least a first means of attachment for attaching the landing unit to the frame or the main body; (C.ii) a skid attached to the support element, such as via a second means of attachment, and disposed at an angle of incline of at least 20° to at most 70° to the central axis.

In some embodiments the UAV may further comprise a docking arm, said docking arm extending laterally outward from the main body.

The UAV as envisaged herein is independent of the operation to be performed and of the location wherein the operation is performed. The use of UAVs, also referred to as 'drones', is known in the art. Generally speaking, an UAV is a small, consumer electronics aircraft that can be piloted autonomously or remotely by a control system. An UAV is most often used for civil and commercial purposes, although also military applications exist. A conventional UAV comprises a main body and one or more rotors configured to provide flight. Flight is understood to include lift-off and landing with an extended period or instance of passing through the air.

The main body of an UAV according to the present invention typically comprises a plurality of primary elements, typically surrounded by a housing. Primary elements are the components and devices necessary for basic and essential UAV operations. The primary elements include a power supply and platform (e.g. lithium-polymer batteries), a computing platform running UAV software (e.g. OS, firmware), and typically several sensors for tracking the position and movement of the UAV. Advantageously, the elements are disposed within a housing for protection of weather, collision, and the like.

Advantageously, the UAV might include onboard computers that fully control the autonomous flight of the UAV and may further include programmed instructions that allow the UAV to take-off, fly, and land autonomously.

Depending on the purpose of the UAV, the main body may further comprise secondary elements, which are elements necessary for specific or dedicated UAV operations and applications. Examples of secondary elements include but are not limited to an optical unit (e.g. camera, scanner), a measurement unit (e.g. sensor devices), a repair unit (e.g. gripping arm, welder), a delivery unit (e.g. box, basket, hook), and so on. The secondary elements are preferably but not necessarily disposed fully within the main body. However, elements that at least partially exceed or protrude from the main body are also compatible for the purposes of the invention. An example is a camera, wherein the camera apparatus is disposed within the main body and the camera lens protrudes out of the main body.

The main body has a central axis, which is defined as the axis running through the central point. This axis may rotate or divide the main body into symmetrical halves, but it may also be an approximation if the main body is asymmetrical. Generally speaking, when the UAV performs a stationary spin, the central axis will be the imaginary line about which the UAV rotates. When the UAV is in normal flight (i.e. not ascending or descending) or rest on a flat surface, the central axis will be perpendicular to the horizon, such as the ground.

It is understood that the central axis allows defining two directions with respect to central axis, or, more generally, the main body.

The term "lateral", more specifically "lateral direction" as used herein generally refers to a sideways direction with reference to the main body. In particular, a lateral direction is defined by an axis or virtual line that runs perpendicular to the central axis as previously defined. A laterally most distant point is thus a point that is located most remote from the main body in a lateral direction.

The term "axial", more specifically "axial direction" as used herein refers to a direction parallel to or along the central axis. In particular, the axial direction is defined by an axis or virtual line that runs parallel to or along the central axis as previously defined. An axially most distant point with respect to the main body is thus a point that is located most remote from the main body in an axial direction.

The main body is coupled to a frame, either dismountable or non-dismountable. By having a non-dismountable coupling the respective parts are intended to stay affixed or connected: the coupling is intended to be permanent. By having a dismountable coupling, the respective parts are intended for repeatable mutual dismounting and remounting that allows interchangeability: the coupling is not intended to be permanent. The frame provides support and structural rigidity. Preferably, the frame is lightweight to allow easier flight and maneuverability. Suitable materials may include aluminum or carbon fiber, but also certain polymers or composite materials are possible.

The frame comprises a plurality of flight arms; each flight arm extending laterally outward from the main body. Each flight arm comprises at least one rotor configured for providing flight. A rotor is considered the actuator which enables flight. Typically, a rotor includes a hub with a (number of) radiating aerofoil that rotates in an approximately parallel plane with the flight arm to provide the lift for the UAV. An UAV comprising more than one rotor is also called a multi-rotor vehicle; examples are a quadcopter (i.e. four rotors), a hexacopter (i.e. six rotors), or an octocopter (i.e. eight rotors).

In a most general embodiment the invention comprises at least three landing units, such as at least four landing units, each landing unit comprising (i) a support member having at least a first means of attachment for attaching the landing unit to the frame or the main body of an UAV as envisaged herein; and (ii) a skid attached to the support element, such as via a second means of attachment and disposed at an angle of incline of at least 20° to at most 70° with the central axis.

In preferred embodiments, the landing unit is attached to a flight arm via said support member, particularly dismountably attached to a flight arm.

However, some flight arms do not allow a coupling of a landing unit, e.g. due to the frame being too weak or comprising obstructing elements. In such embodiments, the landing unit may be attached to a docking arm via said support element. Advantageously, the docking arms are equally spread out about the central axis of the main body in way that the distance between a docking arm and a flight arm is maximal. This prevents any obstruction of a rotor by a docking arm or a landing unit, even if said docking arm or landing unit was to be deformed or damaged during landing or collision. Preferably, the landing unit is situated in and does not extend from a plane shared with the docking arm.

The support member is a structure that connects the skid to another part of the UAV, e.g. to the frame, optionally to a flight arm, to a docking arm or to the main body, e.g. via a docking arm. In addition, the support member provides support to the UAV during landing, but might also serve as protection in case of a collision or harsh landing conditions. In particular embodiments, the support member comprises an extended object, such as a bar or a rod. The support member may have a circular cross section, but also other geometrical shapes (e.g. square, triangle cross sections) are envisaged herein. In particular embodiments, the support member comprises a structure made up of at least two support members. In a first particular embodiment a first support member may be disposed to laterally extend to the flight arm and the second support member may be disposed perpendicular to the first support member; thereby forming a triangular plane for attachments of a skid with an angle of incline. Alternatively in a second particular embodiment the first and the second support member may be both disposed perpendicular to the flight arm and oriented in the same direction, wherein the first support member laterally closest to the main body will have a length greater than the second support member laterally farthest from the main body; thereby forming a triangular plane for attachments of a skid with an angle of incline. Those skilled in the art will appreciate that there exist other variations to the support members that do not change the functionality of the landing unit. Preferably, the support member is lightweight to allow easier flight and maneuverability. Suitable materials may include aluminum or carbon fibers, but also certain polymers, such as polyester, or composite materials are envisaged herein.

The support member has at least a first means of attachment, or attachment means. The first means of attachment allows the support member to attach or couple with an UAV, that is, an element of the UAV, such as a docking arm, a flight arm and the like. The support member may comprise at least a second means of attachment for attachment of the support member to the skid. Thus, in certain embodiments, the skid may be attached to the support member via one or two of such means of attachment. In such an embodiment the support member will serve as the bridge connecting an UAV and a skid.

The attachment means may be dismountable or non-dismountable. By having a non-dismountable attachment the respective parts are intended to stay affixed or connected: the attachment is intended to be permanent. By having a dismountable attachment the respective parts are intended for repeatable mutual dismounting and remounting that allows interchangeability: the attachment is not intended to be permanent.

The skid of an individual landing unit is a structure that serves as the landing base of the UAV during landing, particularly when landing in the docking station. It is understood that the landing base of an UAV as envisaged herein, particularly for landing in the docking station, is formed by the combination of the individual landing units, i.e. skids, of the UAV.

Advantageously, the skid is additionally configured to allow landing outside the docking station. More in particular, the skid of an individual landing unit comprises a landing point, preferably at a free end of the skid, more preferably at the free end closest to the central axis. The landing point is the part of the skid which makes contact in a single contact point with the surface when the UAV rests on a level surface. In this context, the skid can be seen as a leg of the UAV. It is understood that the combination of the individual landing units, in particular of the individual skids, of the UAV, provides for a number of legs for supporting the UAV when resting on a surface and results in a discontinuous landing base, made up of a limited number of individual landing points, in particular one landing point per landing unit or skid, with the landing points placed symmetrically around the central axis. When the external skid surfaces of all the skids (i.e. the surfaces most laterally remote from the main body) are connected circularly with the center of the circle formed by the central axis, the combined virtual surface area forms an inverted conical frustum. This inverted conical frustum corresponds to a virtual surface formed by circularly connecting all the individual landing points. It is thus understood that the plurality of landing units, particularly the plurality of skids, are adapted to allow the landing of the UAV both on a docking station surface as described herein as on any external surface.

In addition, the skid also provides protection in case of a collision or under harsh landing conditions. The skid member might comprise an extended object, such as a beam or a platform, having two ends, and may have circular cross section but also other geometrical shapes (e.g. square, triangle cross sections) are possible. Preferably, the skid is lightweight to allow easier flight and maneuverability. Suitable materials may include aluminum, but also certain polymers, such as polyester, or composite materials are possible. Preferably, the skid is essentially straight. However, the skid may be at least partially curved.

In some embodiments, the skid is at least partially curved towards one ending, in particular towards the end closest to the central axis. In some preferred embodiments, the skid is at least partially curved towards both endings. A curved ending, particularly of the free end closest to the central axis allows a wider landing contact point, thus extending the landing point of the skid and providing for a more stable landing position. Additionally, the curved section may also serve to protect the UAV or certain elements thereof. For example, a curve on the laterally most distant ending of the skid may serve to protect a rotor disposed nearby to the skid, for example during collision; a curve on the axially most distant ending of the skid may serve to protect secondary element (e.g. optical unit) connected to the main body, for example during landing or collision.

In some embodiments a skid axially extends to the same level of a rotor plane, which is a plane perpendicular to the central axis and encompassing a rotor or an aerofoil of said rotor; preferably the skid axially extends beyond said rotor plane. This would allow for the skid to provide additional (lateral and/or axial) protection to the rotor. When this embodiment is present on all the skids, the combined skids essentially form a protective dome over the rotors.

In some embodiments a skid axially extends to the same level of an element plane, which is a plane perpendicular to the central axis and encompassing a secondary element disposed below the main body (i.e. the part of the main body oriented towards the ground during normal flight) preferably the skid axially extends beyond said element plane. This would likewise allow the skid to provide additional (lateral and/or axial) protection to the secondary element. When this embodiment is present on all the skids, the combined skids essentially form a protective dome over the secondary element.

In some embodiments a skid axially extends both to the same level of a rotor plane and an element plane as defined above. When this embodiment is present on all the skids, the combined skids essentially form a protective dome over the UAV. In the above embodiments the skids thus serve a dual functionality: firstly, as the contact point of the landing unit and secondly, as a protective dome.

The skid is disposed at an angle of incline of at least 20° to at most 70° to the central axis.

The angle of incline is determined at the intersection between a virtual line extending from the skid or running parallel thereto with the central axis. If the skid is partially curved, the virtual line is determined by a virtual line running along the partially straight section of the skid. If the skid is completely curved, the virtual line is determined by a virtual line formed by the tangent to skid's central curvature. Preferably, the skids of all landing units extend virtually towards a common central point situated on a central axis of the main body, thereby forming a virtual cone.

In some embodiments the skid has an angle of incline of at least 30° to at most 60°; preferably 35 to 55; most preferably 40 to 50; for example 40° or 45°. The optimal angle is largely dependent on the terrain wherein the UAV is employed. For example, for a harsh rocky terrain a higher angle may be preferable, while for a soft grassy terrain a lower angle may be preferable. The inventors found that angles between 30° to 60° form an optimal angle for all-purposes. In a most preferred embodiment the optimal angle depends on the curvature of the docking station. This allows the UAV to smoothly slide into the docking station.

In some embodiments the skid has a movable joint or mechanism that can vary the angle of incline of a skid; for example by 1° to 20°, such as 10° This may be a passive mechanism, such as a hinge or pivot that bends or moves when pressure is exerted, or an active mechanism, such as an actuator that mechanically adapts and aligns the skid. This allows the UAV to easily adapt to docking stations and/or terrains with different curvatures or slopes.

In some embodiments, the skid is characterized by having at least two landing points, wherein the first landing point is located axially most distant from the main body and the second landing point is situated laterally most distant from the main body, wherein the second landing point is particularly relevant when landing in a docking station.

Alternatively, particularly when landing in a docking station any other point along the skid surface may serve as an additional landing point, or the skid itself may form a rectilinear, extended landing surface. By having more than one landing point or a landing surface, the UAV is capable of safely landing on various surfaces, such as smooth or harsh terrains, even autonomously.

The most axially located landing points of each skid, in particular the free end of each skid located closest to the central axis, should be sufficiently far away removed from one another and the central axis to allow a more stable landing and resting position of the UAV on a surface. Indeed, when the landing points come too close to each other or to the central axis the UAV will risk tilting or tipping over due to an unstable surface or due to environmental circumstances (e.g. weather conditions, such as a gust of wind. However, by having said landing points spread too far away from each other or the central axis, the risk of hitting the frame, the main body or a secondary element attached thereto during landing is increased. Those skilled in the art will appreciate that an optimal ratio between the length of the skid and the location of the at least two landing points is particularly advantageous for the purposes of the invention.

In some preferred embodiments the length of a skid is at least 5 cm to at most 30 cm; preferably 6 cm to 20 cm, more preferably 7 cm to 15 cm; most preferably 8 cm to 12 cm; for example 10 cm or 11 cm. Those skilled in the art will understand that if a flight and/or docking arm comprises a single skid, the length of said single skid is preferably towards the higher recited length ranges, such as 15 cm or 10 cm; however, if a flight and/or docking arm comprises a plurality of skids, such as two skids or three skids, the length of each skid of said plurality of skids is preferably towards the lower recited length ranges, such as 5 cm or 8 cm. Additionally, the length may be adjusted further to the UAV dimensions (e.g. length and width) and/or the UAV weight.

In some preferred embodiments the ratio of the length of a skid to the length of a flight or docking arm to which said skid is attached, is at most 1:1 to at least 1:5, such as ranges between 1:1 and 1:5, for example is about 1:2 or 1:3. The inventors found that the listed ratios present the optimal ratios for all-around purposes of the invention.

In some preferred embodiments, the skids do not extend underneath a projection of the main body, that is, the projection formed by the total of the axes running parallel to the central axis and fully encompassing the main body. By having the area underneath the main body free there is more space for any secondary elements, which could otherwise be obstructed by a skid. Additionally, when the skids do not extend underneath the main body, the corresponding most axially located landing points will automatically not come to close to each other, as outlined above.

In some embodiments the skid extends laterally outward beyond the at least one rotor. This allows the skid to protect a rotor disposed nearby to the skid, for example during collision.

The landing units of the UAV of the present invention are preferably equally spread out about the central axis of the main body. This means that the distance between the landing units (when virtually connecting the landing units) is maximal and equal between each landing unit. This is particularly advantageous for stability during landing, since the weight of the UAV is spread out equally over each landing unit. Moreover, pressure caused by each landing unit on the landing surface is also minimized.

In some preferred embodiments a landing unit is coupled to a flight arm and disposed axially distant from the at least one rotor. The coupling may be established through an attachment means of the support member, but it may also be a different coupling means of a flight arm allowing attachment of the skid. By having the landing unit disposed axially distant from a rotor, any obstruction of the rotor by a landing unit is prevented, even if the landing unit becomes deformed or damaged during a landing or collision. Preferably, the landing unit is situated in and does not extend from a plane shared with the flight arm.

In some embodiments, at least one landing unit, such as at least one skid of a landing unit, comprises a conducting element connected to the main body and adapted for charging of the main body through said conducting element. The conducting element is formed from a conducting material; such as a metal or composite. The conducting element might comprise one or more electrical conduits, such as wires. Alternatively, electrical cables may be passed between the main body and the landing unit through a support member and/or a skid, for instance via a pair of mutually aligned slots in the attachment surfaces of the respective parts. It may further comprise one or more electrical contacts for the passage of electrical power. Advantageously, the conducting element is fully integrated into the landing unit. Additionally or alternatively, the landing unit may form a conducting element; for example when the landing unit is made of a sufficiently conducting material such as a metal.

The present invention further provides a kit comprising at least one landing unit as detailed herein. Advantageously, when an UAV having a plurality of flight arms, such as four, six or eight, extending from its main body is provided, the kit allows providing said UAV with a landing unit as envisaged herein, by mounting landing units on said plurality of flight arms.

The present invention further provides a system, comprising: an unmanned aerial vehicle according to an embodiment of the present invention as described herein; and a docking station adapted for landing of said unmanned aerial vehicle and comprising a conically-shaped housing having a curvature corresponding to the angle of incline of the skids of said UAV.

The docking station is generally independent of the UAV operation to be performed and of the location where the docking station is located or installed. The term "docking" as used herein refers to the action or situation of the UAV landing within the docking station and, preferably, establishing a connecting therewith; thus a docked UAV is understood to be situated within and in contact with the docking station and, preferably, connected thereto.

The housing of the docking station has a dual purpose. Firstly, it provides a protection for any elements or features comprised within the docking station. It is understood this also includes the UAV when docked. Secondly, it enables a mechanical alignment of the UAV when landing into the docking station. The mechanical alignment is established when at least one skid, or a landing point comprised on a skid, comes into contact with the inner housing of the docking station. The curvature of the housing effectively forms a slope allowing the UAV to slide into the docking station. At a certain depth all of the skids of the UAV will come into contact with the housing, at which point the sliding will be restricted and the UAV's weight will fully rest on the docking station, particularly the housing surface.

The conical shape of the housing can be formed by a conical recess, or a recess shaped as a funnel. Preferably the housing surface is smooth or has a low friction surface to enhance the mechanical alignment and sliding of the UAV. The housing can be made from various materials, such as metals, composites or polymers (e.g. polyester). The housing may also be multilayered, for example a metallic inner structure with a polymeric cover. Advantageously, the housing is lightweight, which allows easier transport and installation. When installed on the ground, the docking station is preferably affixed, for example bolted down. By keeping the docking station sufficiently light, however, it can also be installed on otherwise inaccessible surfaces, such as on top of a post (e.g. for lamps, grids,) a roof (e.g. house, car), or even cliffs. This provides additional protection against theft or unwanted handling of the UAV and/or the docking station.

In some embodiments, the housing comprises an opening or hole disposed in the centre of the housing. The opening or hole functions as a drain for excess water or dirt, for example dripping from the UAV. Additionally, in particular embodiments, the hole may provide access to other units provided in the hole, as further described below, such as a guiding unit, a heating unit.

The curvature of a cone is defined as the angle between the height and the slope, the height defined as the axis running through the vertex (or virtual vertex when the cone is a conical frustum) towards its base and perpendicularly intersect the base. In a most preferred embodiment the housing curvature corresponds exactly to the angle of incline of the skids; "exactly" is understood to allow a certain degree of deviation. In particular the difference between the angle of incline and the housing curvature is has a difference of between 0 ° and 5 °, preferably between 0 ° and 2 °, more preferably between 0 ° and 1 °, and most preferably 0 °. The mechanical alignment may also be established if the curvature has different angle than the angle of incline of a skid, albeit less smoothly.

Additionally, if the curvature has an angle lower than the angle of incline of a skid the UAV will at a certain point get stuck without fully resting on the docking station.

In some embodiments, the docking station further comprises a cover disposed above the docking station (in the closed configuration). The cover may shield the UAV form external effects, such as weather (e.g. wind, rain) and temperature (e.g. freezing), but also unwanted interactions, such as animals or a passer-by trying to touch or steal the UAV.

The cover might comprise the same material as the housing, such as a composite material or polymer, or may comprise a different material. The cover is, however, preferably not metallic, to avoid forming a faraday's cage which would interfere with the communication and/or guiding unit of the docking station, such as the GPS connection.

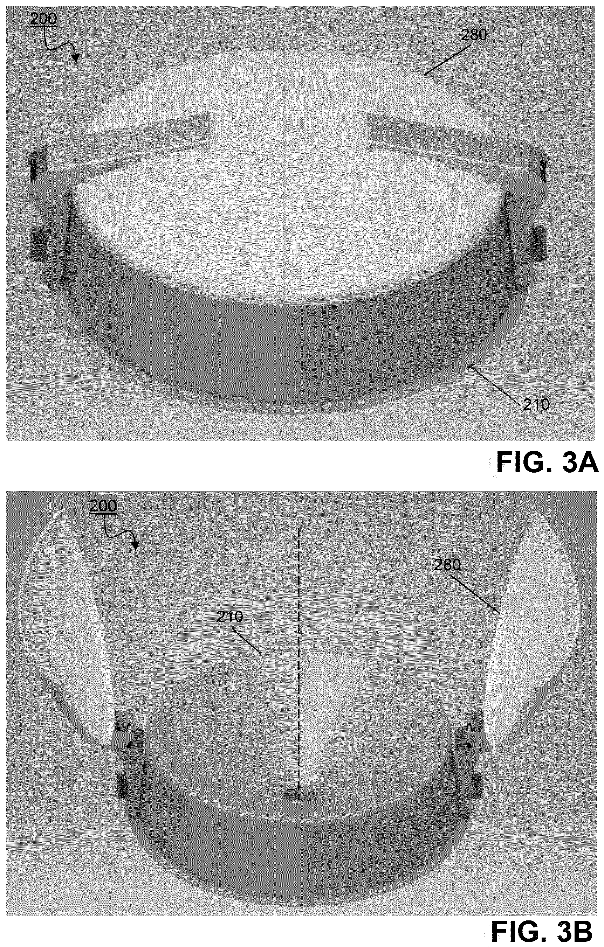

There exist various cover designs, each with advantages and disadvantages. In a preferred embodiment, depicted in FIG. 3A and 3B, the cover comprises two semi-circular plates, attached to the housing, that rotate outwards. In some other embodiments the cover comprises sliding elements that slide the cover over the housing.

In some embodiments the cover is configured to open during lift-off and landing of the unmanned aerial vehicle. This can be accomplished by one or more actuators. For example, the actuators may be connected to a communication unit which detects the presence of an UAV and subsequently activates the actuators. Preferably, the amount of actuators is limited to a minimum, as to keep the weight of the docking station low but also to reduce the chance for malfunction and the cost of maintenance.

In some embodiments the docking station comprises a diameter of at least 50 to at most 300 cm; preferably 75 cm to 250 cm; more preferably 100 cm to 200 cm; most preferably 120 to 180; for example 140 cm, 160cm or 180 cm. Those skilled in the art will appreciate that the docking station may be adjusted further to the UAV dimensions (e.g. length and width) and/or the UAV weight.

In some preferred embodiments the system further comprises a charging unit configured to charge the unmanned aerial vehicle. The charging unit may be external, but may also be integrated into the docking station. When the charging unit is connected to the docking station it allows a charging of the UAV when docked. Advantageously, the charging unit is disposed within the housing of the docking station.

In preferred embodiments, the charging unit is connected to charging elements disposed upon and spread out over at least a part of the surface of the housing in a way to contact the conducting element (i.e. of the landing unit of an UAV as described herein) after landing of the unmanned aerial vehicle. This allows an automatic alignment of the charging and conducting elements. Preferably, two separated areas are formed by the charging elements to form a closed electrical circuit with the conducting element of the UAV. In other embodiments, the charging unit charges the UAV through induction. The charging element is formed from a conducting material; such as a metal or composite.

In some embodiments, the charging elements fully cover a surface area, such as a plate; for example a metal plate, such as an aluminium plate. In some embodiments the charging elements form rows or columns, such as wires; for example metal wires, such as copper wires.

In some embodiments the system further comprises a heating unit configured to heat the docking station. The heating can be external, such as a fan or ceramic plate. The heating unit can also use a present charging unit and/or elements; for example, the metal plate and/or wires can be connected to resistors which convert the electrical power to heating; adv. condensation and prevent freezing of the structure and the UAV battery.

In some embodiments, the system further comprises a communication unit. The communication unit can be used for establishing a communication between the UAV and the docking station. This may be a local wireless receiver and transmitter (e.g. Bluetooth, infrared, WiFi, radio), or a global receiver and transmitter (e.g. gprs). This allows an UAV to better establish the position of the docking station. Additionally or alternatively, the communication unit can be used for establishing a communication with external systems (e.g. a central server, database, cloud) or an operator. This allows an indirect communication with an UAV, for example when the UAV is located in a remote area. While the UAV will always have a communication module, the direct connection of the UAV with the docking station (e.g. instead of an indirect communication through the internet), can be considered as more reliable (e.g. in remote areas where there is little or no 3G connection). The docking station will have a connection with the internet with for example a wired internet connection. The docking station can forward relevant information to and/or from the UAV using this local communication module. Advantageously, the communication unit is disposed within the housing of the docking station.

In some embodiments the docking station comprises a memory device, for storing of data from (e.g. pictures, measurements) or sending data (e.g. updates, instructions) to the unmanned aerial vehicle (100). The docking station may also be connected to a central server, database and/or cloud to allow a collection of said data. This allows the memory of an UAV to be kept sufficiently available for the necessary operations.

In some embodiments, the system further comprises a guiding unit configured to guide the UAV during landing into the docking station. The guiding unit can be a beacon, such as an infrared light, or a transmitter, such as a GPS transmitter. Preferably, the system comprises at least two guiding units, e.g. a GPS system for a rough localization and a beacon for a more accurate landing of the UAV within the docking station.

Advantageously, the guiding unit is disposed within the housing of the docking station.

In particular embodiments, the system of the present invention comprises (A) an unmanned aerial vehicle according to an embodiment as described herein; and (B) at least two docking station according to an embodiment as described herein.

The system of the present invention comprising at least two docking stations allows a single UAV to efficiently cover a large area without the need to return to a single docking station. The placement of the individual docking stations may be based on several parameters; such as the flight-time or the expected battery time of the UAV. For instance, when the UAV has to perform several energy draining operations the distance between the docking stations should be limited thereto.

The system of the present invention comprising at least two docking stations is particularly useful for automated operations. Although, also an external operator may also use an UAV's functionality from a remote control point. This may be useful for an operator working on a specific location; when the operation is finished or the battery of the UAV runs low, the UAV may be instructed to automatically look for a docking station, for example the most nearby docking station. In the meantime, the operator may perform other task and/or travel to a second location where he can summon a charged UAV.

In some embodiments, the system of the present invention comprises a plurality of docking stations, for example three, five, ten or more. The more docking stations are placed, the larger the area covered and accessible to a single UAV.

In some embodiments the system of the present invention comprises at least two UAVs, for example two, three or five. When several operations have to be performed simultaneously or in remote areas, the system of the present invention might require more than one UAV. For example, at an area that requires a constant surveillance, a first UAV may perform the operation while a second UAV is charged in a station; then, when the first UAV runs low on battery the second UAV is activated to replace the first UAV so that the first UAV can return to a free docking station.

Additionally or alternatively, each UAV may comprise different secondary elements to complement each other. For example, a first UAV may be equipped with an optical unit and a second UAV with a repair unit. The UAVs may work together in tandem or after each other; for example first a structural damage is measured by a first UAV and recorded data is used to performed reparations by a second UAV. This way, the secondary elements which would together be too heavy for a single UAV can be split amongst two or more UAVs.

In particular embodiments, the system of the present invention further comprises one or more modules. A module as envisaged herein provides additional functionality to the system. Generally speaking, a module allows for receiving, interpreting and transmitting of data related to a specific function, which may include automatically activating or steering the UAV. Examples include a weather module, a traffic module, an agricultural module, a surveillance or security module, a delivery module, a construction or inspection module. Below some illustrative examples are presented, however, the scope of the present invention is by no means limited thereto.

A weather module allows the system, in particular a docking station, to recall an UAV based on weather data; for example when a storm is expected that might interrupt the operations or even damage the UAV.

A traffic module allows the system, in particular a docking station to activate an UAV based on traffic data; for example when an UAV is programmed to survey certain areas for traffic. Additionally, it may allow the system, in particular a docking station to collect and interpret traffic data from an UAV, for example when reporting traffic jams or accidents, or alternatively, measuring smog levels arising from traffic.

An agricultural module allows the system, in particular a docking station to activate an UAV based on agricultural data; for example when an UAV is programmed to survey certain agricultural areas, for instance for plant growth or infections. Additionally, it may allow the system, in particular a docking station to collect and interpret agricultural data from an UAV, for example when reporting crop growth or damage.

A delivery module allows the system, in particular a docking station to activate an UAV based on delivery data; for example when an UAV is programmed to deliver a package.

A construction or inspection module allows the system, in particular a docking station to activate an UAV based on construction or inspection data; for example when an UAV is programmed to inspect certain structures, such as a solar panel using a thermal camera.

A surveillance or security module allows the system, in particular a docking station to activate an UAV based on surveillance or security data; for example when an UAV is programmed to inspect certain housing or areas, such as after activation of an burglar alarm, or alternatively, have an UAV patrol an area and report any movements or suspicious activity. Additionally, it may allow the system, in particular a docking station to collect and interpret delivery data from an UAV, for example when reporting a failed or successful delivery.

### EXAMPLES

To better illustrate the properties, advantages and features of the present invention some preferred embodiments are disclosed as examples with reference to the enclosed FIGs.

Accordingly, the present invention discloses many embodiments and adjustments as appreciated by those skilled in the art and the scope of the present invention is by no means limited to one the illustrative examples presented below.

### Example 1: UAV (100)

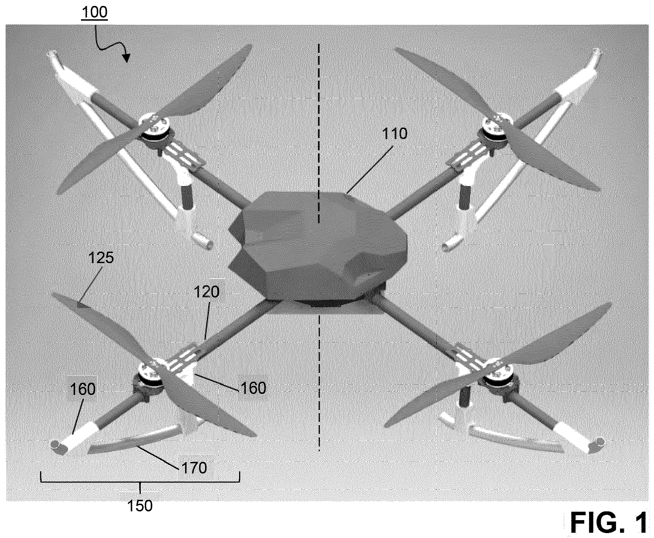

In **FIG. 1** an illustration of an UAV (100) according to a particular embodiment of the present invention as viewed from the side looking down.

The UAV (100) comprises four flight arms (120), each flight arm (120) comprising one rotor (125); such an UAV model is also called a quadcopter. Coupled to each of the four flight arms (120) is a landing unit (150), each landing unit (150) comprising a support member (160) and a skid (170). Since there are four flight arms (120) there are accordingly also four landing units (150).

According to this exemplary embodiment each landing unit (150) comprises two support members (160), wherein the first support member (161) is disposed to laterally extend to the flight arm (120) and the second support member (162) is be disposed perpendicular to said flight arm (120) and thus also to the first support member (161).

The skid (170) is attached to the first (161) and the second (162) support members. The skid is thus disposed at an angle of incline of about 50° with the central axis (dashed line).

Additionally, the skid (170) is partially curved towards both of the ends of said skid (170).

The landing units (150), that is, the first (161) and second (162) support members and the skids (170) are made from carbon fiber. Each of the landing units (150) can be dismounted and subsequently replaced in case of deformation or damage.

### Example 2: Docking station (200)

In **FIG. 3** an illustration of a docking station (200) according to a particular embodiment of the present invention as viewed from the side looking down, in a closed configuration (**FIG. 3A**) and an open configuration (**FIG. 3B**).

The docking station (200) comprises a conically-shaped housing (210) having a curvature corresponding to the angle of incline of the skids (170) in Example 1. The docking station (200) further comprises a cover (280) of two semi-circular plates attached to the housing.

Each of the semi-circular plates is connected to a separate actuator, which enables the cover (280) to rotate outwards, for instance before and after landing and take-off of an UAV (100).

The housing (210) and the cover (280) are made from polyester, and are further bolted to the ground.

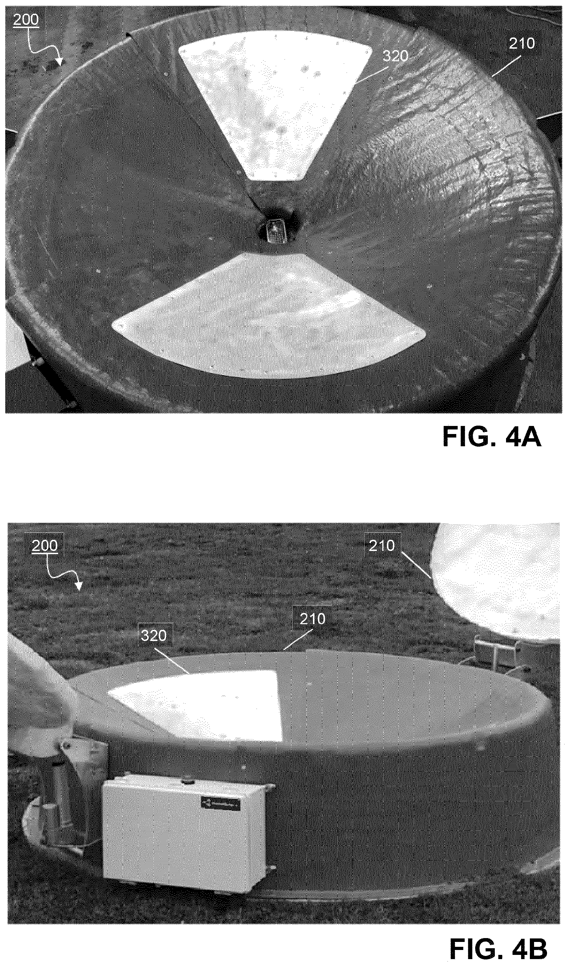

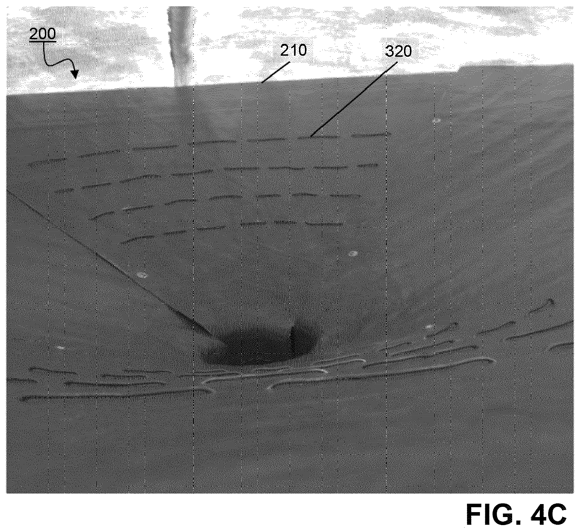

**FIG. 4** represents an illustration of a more particular embodiment of the docking station (200) according to the present invention. Therein the docking station (200) further comprises a charging unit configured to charge the unmanned aerial vehicle through charging elements (320) disposed upon and spread out over at least a part of the surface of the housing (210).

In **FIG. 4A** and **FIG. 4B** the charging elements (320) comprise two planar or sheet-like charging unit; in particular two aluminium plates.

In **FIG. 4C** the charging elements (320) comprise a plurality of wires; in particular copper wires.

## Claims

1. An unmanned aerial vehicle (100) comprising:
(A) a main body (110) having a central axis;
(B) a frame coupled to the main body (110) comprising a plurality of flight arms (120), each flight arm (120) extending laterally outward from the main body (110) and comprising at least one rotor (125) configured for providing flight; and
(C) at least three or at least four landing units (150), preferably equally spread out about the central axis of the main body (110), each landing unit comprising
(C.i) a support member (160) having at least a first means of attachment for attaching the landing unit (150) to the frame or the main body (110); and
(C.ii) a skid (170) attached to the support member (160) and disposed at an angle of incline of at least 20° to at most 70° to the central axis, preferably at least 30° to at most 60°.

2. The unmanned aerial vehicle (100) according to claim 1, wherein the skid (170) of each landing unit (150) does not extend underneath the main body (110).

3. The unmanned aerial vehicle (100) according to claim 1 or 2, wherein the skid (170) of each landing unit (170) is at least partially curved, preferably towards one or both of the ends of said skid (170).

4. The unmanned aerial vehicle (100) according to any of claims 1 to 3, wherein at least one landing unit (150) comprises a conducting element connected to the main body (110) and adapted for charging the main body (110) through said conducting element.

5. The unmanned aerial vehicle (100) according to any of claims 1 to 4, wherein a landing unit (150) is coupled to a flight arm (120) and disposed axially distant from the at least one rotor (125).

6. The unmanned aerial vehicle (100) according to claim 5, wherein the skid (170) of the landing unit (150) coupled to a flight arm (120) extends laterally outward beyond the at least one rotor (125) attached to said flight arm (120).

7. The unmanned aerial vehicle (100) according to any of claims 1 to 6, wherein a landing unit (150) is coupled to a docking arm (130) extending laterally outward from the main body (110).

8. The unmanned aerial vehicle (100) according to any of claims 1 to 7, wherein the length of the skids (170) and the length of the flight (120) and/or docking arms (130) have a ratio of at most 1:1 to at least 1:5.

9. A system (300), comprising:
• an unmanned aerial vehicle (100) according to any of claims 1 to 8; and
• a docking station (200) adapted for landing of the unmanned aerial vehicle (100) and comprising a conically-shaped housing (210) having a curvature corresponding to the angle of incline of the skids (170).

10. The system (300) according to claim 9, wherein system (300) further comprises a charging unit configured to charge the unmanned aerial vehicle (100).

11. The system (300) according to claim 10, wherein the charging unit is connected to charging elements (320) disposed upon and spread out over at least a part of the surface of the housing (210).

12. The system (300) according to any of claims 9 to 11, further comprising a guiding unit configured to guide the unmanned aerial vehicle (100) during landing into the docking station (200).

13. The system (300) according to any of claims 9 to 12, further comprising a heating unit configured to heat the docking station (200).

14. The system (300) according to any of claims 9 to 13, further comprising a cover (280) disposed above the docking station (200) and configured to open and close before and/or after lift-off and landing of the unmanned aerial vehicle (100).

15. The system (300) according to any of claims 9 to 14, further comprising two or more docking stations.
